# EUROPEAN PATENT APPLICATION

(11) **EP 2 210 678 A1**
(43) Date of publication of application: **28.07.2010**
(21) Application number: 08761520.9
(22) Date of filing: 21.04.2008
(51) Int. Cl.: B09B 3/00, C05F 1/00

(54) **BIOTECHNOLOGICAL METHOD FOR THE PROCESSING OF MEAT BY-PRODUCTS AND RESULTING PRODUCT**

(30) Priority: 16.11.2007 ES 200703041
(71) Applicant: Muñoz Montaño, Juan Ramón, 28013 Madrid (ES)
(72) Inventor: Muñoz Montaño, Juan Ramón, 28013 Madrid (ES)
(74) Representative: Lorente Berges, Ana
(86) International application number: PCT/ES2008/000274
(87) International publication number: WO 2009/063103

(57) **Abstract**

In the biotechnological procedure for the treatment of meat waste of the invention, we part from the raw material of meat waste from agro-food industries and tanning, which, after suffering a pretreatment of degreasing and grinding, undergoes incubation with bacterial strains such as *Bacillus subtilis* and *E.Coli,* in aerobic or anaerobic conditions, with stirring, under atmospheric pressure and at a temperature of between 30 and 45ºC. The result is the production and secretion of enzymes such as proteases, elastases, collagenases, keratinases and lipases, which leads to the digestion of the meat waste, transforming them into a liquid consistency hydrolysate composed mainly of aminoacids and peptides. This hydrolysate is then collected for further use as organic amendment for soil and plants treatment acting as biostimulant and biopesticide due to its high concentration in sulfur aminoacids.

## Description

### DESCRIPTION

### OBJECT OF THE INVENTION

The present invention refers to a biotechnological processing of category C animal waste as stipulated in the European Regulation EC No 1774/2002 of the European Parliament and of the Council of 3 October 2002 to convert meat by-products from slaughterhouses and meat processing and degreasing plants through a biotechnological treatment based on a cocktail of protease enzymes. This procedure aims to obtain organic amendments (amino acids and peptides) with bio-stimulant and biocontrol effect to be used on plants and soils.

The object of the invention is, therefore, to provide a new method technically feasible and economically viable for the biotechnological treatment through biohydrolysis of these meat by-products. The invention is based on the use of animal and plant proteases (subtilisins, keratinases, papain, thrombin, amongst others). The proteases that are overexpressed by genetically altered bacteria are released into the growth medium where the denatured and defatted meat by-product is added. The proteolytic enzymes are secreted in the growth medium in an inactive state. Subseguently, by selfdigesting and/or pH change in the medium, the enzymes arc activated to begin the process of biohydrolysis of the meat by-products.

The present invention also refers to the obtained product, a complex of amino acids and peptides with high sulfur content, which, formulated in the quantities required for each plant and / or soil, is suitable for plant growth as a booster (Blostlmulant) and as a biological pesticide (biocontrol).

### BACKGROUND OF THE INVENTION

At present there is a type of animal waste, from the meat industry, slaughterhouses, etc., whose management is a problem and a cost for the generators of such waste.

Among these types of animal waste, classified as category 3, we can make the following distinctions:
a) Animal waste from slaughterhouses which are rejected for human consumption which are not affected by any kind of disease transmissible to humans or animals according to EU legislation.
b) Animal waste from industrial processes related to human food, including bone degreasing.
c) Skin, nails and animal horns from slaughterhouses, after being inspected and deemed suitable by the relevant health authority according to EU legislation.

Animal waste falling within (a) and (b) are commonly called fleshing. The waste falling within (c) is known as keratin-rich waste.

The treatment of this waste, fleshing and keratin-rich waste (bristles, nails and feathers), is at the moment carried out through various physical and chemical systems which entail total or partial destruction of these waste, with the disadvantage that there is no satisfactory economic return.

Some of these methods or solutions for eliminating this waste are the incineration, the assimilation in cement kilns, burial, transformation into compost, biogas production or storage in controlled landfills.

There are treatments for eliminating meat waste, especially animal carcasses. This procedure consists of the physical and biological treatment of the material to remove in the form of a controlled anaerobic fermentation in liquid phase. Nevertheless this system has limitations as the hydrolysis of meat products is carried out using an activator (integral sodium alginate) which generates salt concentrations that interfere in the use of the final product. Moreover, the type of the used raw materials is dead animals in general, without any specification of the raw material characteristics.

There is also another process for the transformation of the tanning products, known as fleshing waste. In this process the hydrolysis of meat products is carried out using mineral acids that have not been specified. It is probable in these cases the use of acids classified as strong acids (HCl, H2SO4, HNO3).

The use of strong acids for the hydrolysis of meat waste produces an acid final product (pH 1-2) which must be neutralized with strong bases (NaOH / KOH) having as a final result large amounts of salts like Na2SO4, K2SO4, NaNO3, KN03, which are incompatible with the use of the final product or as an agricultural fertilizer and amendment for plants and soils.

Otherwise, the problem of using pesticides for agricultural use continues to cause immense opposition at social, political and environmental levels. The proposed solutions until the date do not replace existing pesticides and have not demonstrated any benefits whatsoever:
- Use of genetically modified plant products (transgenics)
- Use of insect sexual attraction systems based on pheromones to attract insects to spots where they are eliminated or to cause confusion among them and hinder their encounter and reproduction.

### DESCRIPTION OF THE INVENTION

The biotechnological procedure for the treatment of meat waste which the invention proposes solves at a fully satisfactory level the aforementioned problems in the various aspects discussed.

The method of the invention consists in treating the aforementioned meat by-products from slaughterhouses, industrial processes related to human food, tanning companies, etc., which are first properly degreased until containing a maximum of 10% of fat content. The by-products are grinded and denatured at 3 bar pressure and 20 min at a temperature of 133°C as indicated by the European legislation European Regulation EC No 1774/2002 of the European Parliament and of the Council of 3 October 2002. The result is a pulverized by-product, denatured and sterilized, ideal for subsequent biohydrolysis.

After this process of adjusting the raw material, it undergoes the biohydrolysis procedure proposed by the invention. This biohydrolysis process is carried out by incubating the meat waste with bacteria. These bacteria have previously been genetically transformed with DNA from animal and plant proteases. The enzymes are cloned into expression vectors suitable for each type of used bacteria (*B*. *subtilis* or *E.Coli*). The DNAs of the selected proteases are inserted in their respective expression vectors using the proenzyme form required in most processes of bacterial secretion. The proenzymes secreted in the growth medium of the bacteria, are activated either by changing the pH of the medium or by self-activation through selfproteolisis.

The enzymes secreted to the medium, usually acting in a cocktail of proteases (2 or more), are responsible for biohydrolysing the meat by-products under aerobic conditions, with continuous stirring under atmospheric pressure and a temperature between 30 and 45°C.

Along with the cocktail of protease, lipases are used to transform the 10% of fat existing in the growth medium which hinder obtaining higher yields of transformation.

The use of transformed bacteria such as *B*. *subtilis* and *E.Coli* enables protein expression, mainly through specific protein expression vectors, resulting in the production and secretion of the enzymes mentioned above: proteases, elastases, collagenases, keratinases and lipases, in the medium where bacteria grow, which leads to the digestion of meat waste, transforming them into a hydrolysate composed mainly of aminoacids and peptides.

Therefore, the result of the biohydrolysis is a hydrolysed product of liquid consistency, or solid if they were lyophilized, which is collected for further use as an organic amendment fnr the treatment of soils and plants.

The organic amendments are added value products which are economically profitable, whether their effect is biostimulant and more if they have an effect of biocontrol and can act as biopesticide. This fact enables the present invention to implement the process at an industrial level.

The organic amendments can be characterized as a product enriched in aminoacids and soluble peptides with biostimulant properties for its use in plant crops. The hydrolysates have high contents of sulfur aminoacids due to the use of keratin as one of the original residues highly enriched in nails, hair, horns and skin.

The presence of high contents of sulfur aminoacids such as cysteine or its derivatives in the hydrolysis is essential for the use in plants and soils as these aminoacids have a biostimulant and biocontrol (biopesticide) effect that can be used to replace existing pesticides.

### EXAMPLE OF THE INVENTION

In an embodiment of the biotechnological procedure for the treatment of meat waste of this invention, we part from meat waste mainly from tanneries, slaughterhouses, farms and markets.

This raw material possesses a high content of protein and, in lower content, lipids. The lipids must be previously removed so as not to interfere in the subsequent stage of hydrolysis. The starting material is ground, after being degreased, according to current regulations as described in the following table:

| | **Particle size** | **Temperature** | **Pressure** | **Time** |
|---|---|---|---|---|
| **Method 1** | <50 mm | 133°C | 3 Bars | 20 min |
| **Method 2** | <150 mm | 100°C | - | 125 min |
| **Method 3** | <30 mm | 100ºC | - | 95 min |
| **Method 4** | <30 mm+ added fat | 100ºC | - | 16 min |
| **Method 5** | <20 mm | 80ºC | - | 120 min |

Once you get this type of waste perfectly degreased and grinded, it undergoes the biohydrolysis procedure itself.

More specifically, the meat waste undergoes a process of incubation or digestion with bacterial strains transformed with protein expression vectors. These bacteria strains are *Bacillus subtilis* and *E.Coli* due to the ease of protein expression of these bacteria and their transformation with genomes that encode proteases, lipases and elastases.

The incubation is carried out in semi-solid bioreactors with continuous stirring in aerobic or anaerobic conditions, under atmospheric pressure and at a temperature of 30 - 45 º C. The inoculation of the bacteria then begins to produce enzymes such as proteases (subtilisin, papain, thrombin, etc.), and lipases that hydrolyze the meat waste up to transforming them into basic parts of proteins: aminoacids and peptides.

The digestion of the meat product is carried out through the action of these enzymes over their substrates, breaking the chains of proteins and lipids, transforming them into a hydrolysate composed mainly of aminoacids and peptides.

Due to the source of the material and its enrichment in sulfur by possessing large amounts of aminoacid cysteine present in keratin-rich tissues (hair, nails, horns or feathers), the resulting hydrolysate has dual properties: on the one hand a biostimulant effect and on the other a biocontrol and biopesticide effect.

This has a beneficial effect on plant growth, in the treatment of soils and pest control by acting as an insecticide, fungicide and / or herbicide.

## Claims

1. ^{st} - Biotechnological procedure for the treatment of meat waste such as animal waste from slaughterhouses, farms and markets, industrial processes related to human food, tanning companies, composed mainly of keratin, connective and muscle tissue, wherein after a period of adaptation of this raw material consisting of degreasing and grinding, undergoes biohydrolysis by incubation with bacterial strains under conditions of controlled digestion by enzymes secreted by them, with stirring, under atmospheric pressure and in an aerobic or anaerobic environment, depending on the bacteria to use.

2. ^{nd} - Biotechnological procedure for the treatment of meat waste, according to the 1st claim, wherein the bacteria used in such procedures are of the *Bacillus subtilis* and *E*.*Coli* type, because of the ease of protein expression of these strains.

3. ^{rd} - Biotechnological procedure for the treatment of meat waste, according to previous claims, wherein the enzymes secreted by the bacteria acting on the biohydrolysis are mainly keratinases, elastases, collagenases, lipases and wide-spectrum proteases.

4. ^{th} - Biotechnological procedure for the treatment of meat waste, according to previous claims, wherein the temperature at which the process of incubation or digestion of meat waste is carried out is between 30 and 45 ºC.

5. ^{th} - The product obtained through the biotechnological procedure for the treatment of meat waste, according to previous claims, wherein it consists of a hydrolysed product of liquid consistency, composed primarily of aminoacids and peptides with hiostimulant properties for the treatment of crops.

6. ^{th} - The product obtained, according to the 5th claim, wherein these hydrolyzed products possess high contents of sulfur aminoacids, which is essential for the use in plants and soils because of their biostimulant and biopesticide effects.

## Amended claims

Statement under Art. 19.1 PCT
1. ^{st} - Biotechnological procedure for the treatment of meat waste such as animal waste from slaughterhouses, farms and markets, industrial processes related to human food, tanning companies, composed mainly of keratin, connective and muscle tissue, wherein after a period of adaptation of this raw material consisting of degreasing and grinding, undergoes biohydrolysis by incubation with bacterial strains genetically transformed that overexpress specific proteases under corrditions of controlled digestion by enzymes secreted by them, with stirring, under atmospheric pressure and in an aerobic or anaerobic environment, depending on the bacteria to use, consisting the final process in the transformation of the present proteins of such a by-products in product of lower molecular size such as peptides and aminoacids available for plants..

2. ^{nd} - Biotechnological procedure for the treatment of meat waste, according to the 1st claim, wherein the bacteria used in such procedures are of the *Bacillus subtilis* and *E.Coli* type, that overexpress proteases through genetically transformed bacteria because of the ease of protein expression of these strains.

3. ^{rd} - Biotechnological procedure for the treatment of meat waste, according to previous claims, wherein the enzymes overexpress and secreted by the bacteria acting on the biohydrolysis are mainly keratinases, elastases, collagenases, lipases and in general wide-spectrum proteases.

4. ^{th} - Biotechnological procedure for the treatment of meat waste, according to previous claims, wherein the temperature at which the process of incubation or digestion of meat waste is carried out is between 30 and 45 ºC.

5. ^{th} - The product obtained through the biotechnological procedure for the treatment of meat waste, according to previous claims, wherein it consists of a hydrolysed product of liquid consistency, composed primarily of aminoacids and peptides with blostimulant properties for the treatment of crops.

6. ^{th} - The product obtained, according tn the 5th claim, wherein these hydrolyzed products possess high contents of sulfur aminoacids, which is essential for the use in plants and soils because of their biostimulant and biopesticide effects.

After the issue of the International Search Report, regarding the PCT/ES2008/000274 file has been proceeded together with this declaration, to the declaration of claim modifications first submitted with the International application, taking in consideration the article 19 of the Patent Cooperation Treaty.

Therefore, on the mentioned International Search Report has been pointed out as especially relevant documents:
- (X) US 6025187 A (PENAUD) claims 6
- (X) US 6350608 B1 (TERAN et al.) claims 1-6
- (A) ES 2233203 (MORENO)

Taking in consideration all of this and the modifications presented, it is intended to emphasize those characteristics not contained in the priority patents abovementioned, but on the other hand, they are important in the PCT/ES2008/000274 patent
